Europäisches Patentamt

European Patent Office

Office européen des brevets

(11) Publication number: **0 498 135 A2**

# EUROPEAN PATENT APPLICATION

(21) Application number: **91500128.3**

(22) Date of filing: **14.11.91**

(51) Int. Cl.5: **H04M 17/02**, G07F 7/00

(30) Priority: **05.02.91 ES 9100291**

(43) Date of publication of application:
**12.08.92 Bulletin 92/33**

(84) Designated Contracting States:
**AT BE CH DE DK FR GB GR IT LI LU NL SE**

(71) Applicant: **TELEFONICA DE ESPANA, S.A.**
**Gran Via, 28**
**E-28013 Madrid(ES)**

(72) Inventor: **Calero Gonzalez, Juan, Telefonica**
Investigaci n
y Desarrollo, S.A., Emilio Vargas, no 6
E-28043 Madrid(ES)
Inventor: **Merino Ordax, Roberto, Telefonica**
Investigaci n
y Desarrollo, S.A., Emilio Vargas, no 6
E-28043 Madrid(ES)

(74) Representative: **Carpintero Lopez, Francisco**
**HERRERO & ASOCIADOS, S.L. Alcalá, 21**
**E-28014 Madrid(ES)**

(54) **Modular public telephones adaptation unit.**

(57) Modular public telephones adaptation unit, the invention being part of the modular public telephone management system, actually being a modular public telephones adaptation unit for the modular public telephones management system, which is designed to concentrate and allow access to the packages switching network of such modular telephones as are not connected to the switched telephone network through a validation and identification unit, cooperating for such purpose with validation and identification units that have no direct access to the packages switching network, to communicate credit card processing messages to the validation and invoicing centre, comprising a lines unit, a central processing unit, a communications unit, a feeder unit and the X.25 connector.

FIG.-1

## OBJECT OF THE INVENTION

The present invention relates to a modular public telephones adaptation unit, for the modular public telephones management system, designed to concentrate and allow access to such modular telephones as are not connected to the switched telephone network through a validation and identification unit, and to assist validation and identification units that do not have direct access to the packages switching network to such end, in order to communicate the credit card processing messages (validation and invoicing) to the validation and invoicing centre.

## FIELD OF THE INVENTION

This invention is applicable in the field of telecommunications and in particular as part of the infrastructure required for correct operation of the new public telephone service, which allows calls to be made using different means of payment.

## BACKGROUND TO THE INVENTION

There currently exists no known background to this invention, for, given its use, it is basically designed to be fitted within the modular public telephones management system.

There is no background as to the basic features thereof since its function is defined as the possibility of using credit cards to make and collect calls, which services have all been newly created.

## DESCRIPTION OF THE INVENTION

The modular public telephones adaptation unit (MTAU) is part of the modular public telephone management system, which system comprises the following large blocks:

- Modular public telephones (MT), intelligent payphones that take coins, phonecards and credit cards.
- Validation and identification unit (VIU), designed to identify and authorize connection of the modular telephones to the switched telephone network, and to expedite access of validation and invoicing messages for calls made from the modular public telephones with credit cards to the credit cards validation and invoicing centre (VIC) through the packages switching network (IBERPAC).
- Modular public telephones adaptation unit (MTAU), dealing with concentrating and allowing access to the packages switching network (IBERPAC) of such modular public telephones as are not connected to a validation and identification unit and of such validation and identification units as have no direct access to the packages switching network, to communicate credit card processing messages to the credit cards invoicing and validation centre.

- Modular public telephones operating system (MTOS), dealing provincially with the centralization of alarms reported by modular telephones, validation and identification units and modular public telephones adaptation units, likewise generating breakdown and repair reports and statistical reports, teleprogramming modular public telephones, validation and identification units and modular public telephones adaptation units.
- Validation and invoicing centre (VIC), dealing nationally with the validation of credit cards, keeping black and grey lists thereof, and contemporaneously communicating with the card issuing centres.
- The modular public telephones adaptation unit (MTAU) is located within the system defined hereinbefore, with the following function:

A.- To act as interlocutor between the validation and invoicing centre and the modular public telephones, so far as the validation of credit card calls is concerned.

B.- To afford access to the packages switching network (IBERPAC) for validation and identification units that do not have this facility.

c.- To execute other preservation and maintenance functions, teleprogramming operating parameters, sending daily routine reports and reporting alarms.

In light of the foregoing, the modular public telephones adaptation unit comprises a set of interconnected units, all described hereinafter:

1.- FEEDER UNIT.- This unit generates the necessary voltages for all the modular public telephones adaptation unit, from the telephone exchange voltage.

This unit supplies the necessary power for suitable operation of the modular public telephones adaptation unit subject hereof, fulfilling different voltage and input and output load requirements, all necessary for the modular public telephones adaptation units to be suitably fed, according to artificial lines, analogue or digital outputs. It should be noted that the modular public telephones adaptation unit is an unattended apparatus located at a centre, thereby to guarantee suitable computing efficiency by using a basic redundant setup, which comprises two identical feeder modules working in parallel.

Furthermore, the feeder unit is provided to handle possible abnormal situations, that are all harmful, among them overvoltages at the connection outlets to digital lines, which could lead to the destruction of the digital logic.

The protection circuit normally becomes operational when there are irreversible failures at converter modules.

In order to improve supervision and maintenance of the equipment fitted, the feeder subsystem acts to detect the status of its power lines.

Under all abnormal situations, the feeder unit gives a local alarm, switching on a light pencil at the central panel, giving another warning to the actual centre system, by means of a relay contact that is usually open.

2.- COMMUNICATIONS UNIT.- This unit allows receipt of incoming calls through the switched telephone network or else by means of the special services system (SSS) and outgoing calls to be made, both by multifrequency and by decadic dialling.

Communication is established by modem, using a microprocessor as control unit.

Furthermore, the communications unit acts as a modem for the X.25 interface, being controlled by the same microprocessor, discharging to the central unit processing this task. At the same time, the communications unit allows connection to the switched telephone network, or to the special services system, and to the packages network (IBERPAC).

The circuit connecting to the switched telephone network is especially designed to establish communication with the modular public telephones operating system (MTOS), to transmit all messages required by the central processing unit.

This communication can take place as ordered by the modular public telephones adaptation unit or by the modular public telephones operating system.

In the event of communication being established by the modular public telephones adaptation unit, the communications unit has devices for multifrequency and decadic dialling, in addition to a dialling tone detector to verify that a line exists prior to dialling.

In the event of the call being by the modular public telephones operating system, this unit has a call current detector.

3.- CENTRAL PROCESSING UNIT.- Such dealing with overall system control, managing all modular public telephones adaptation unit communications.

This unit has the main system parameters. Communication between the various units takes place by means of a parallel bus.

The central processing unit communicates with a lines unit and with the communications unit, by means of a double entry meter that allows asynchronous reading and writing between the microprocessors. All events outside the central processing unit (CPU) are activated by interruptions. This allows a high-speed reply and modular software design.

The central processing unit structurally comprises two microprocessors that can have access to all the unit's resources.

There are also several buffers designed for demultiplexing and isolating addresses and data buses. Behind these buses are all the resources, addressed in memory.

5.- LINES UNITS.- Such being designed to deal with controlling connection of the special services system (SSS) or switched telephone network (STN).

The lines unit comprises a modem, multiplexers thereof for connection to the special services system or the switched telephone network, the necessary line cut and opening detectors and microprocessor controlling these functions.

The lines unit connects the modular public telephones adaptation unit to the special services system or switched telephone network output links.

This unit comprises the electric shocks protection devices, to which end it has two different circuits:

- Control circuit.
- Lines connection circuit.

The control circuit houses the logic circuitry that controls connections to the telephones and the centre lines. The lines connection circuit contains the necessary analogue circuitry for lines connection, and the necessary detectors and protections.

A microcontroller required to execute programmes is the core of the control circuit located in the lines unit.

In the lines unit, a decoder controlled by the microcontroller required to execute programmes, outfits the necessary devices for external control:

- One for outlet of signals controlling the lines connection elements.
- Another one providing two-directional control to the central processing unit (CPU).

The status of the lines is read directly by the microcontroller for the execution of programmes through its ports.

The lines connection circuit has two special services system or switched telephone network connection lines and at each connection detects off-hook and the call current, which signals are read by the microcontroller.

Receipt signals can be taken and line transmission signals injected by means of operational circuits.

The line unit has devices acting under the control circuit signals allowing data receipt or transmission between the modem and the special services system or switched telephone network connection lines.

6.- INTERCONNECTION UNIT.- Such being designed to interconnect the above-mentioned units and allowing connection to the switched network, to the centre feeding and to the packages switching network, either by direct connection through interface X.25 or by means of a two-wire modem.

The interconnection unit takes the form of a card, connecting all units among each other:

- Feeder unit.
- Lines unit.
- Central processing unit.
- Communications unit.

Additionally, the inner part thereof allows connection of the centre lines, the switched telephone network lines, the special services system lines, general feeding input, X.25 interface normalised connector and V.22 bis dedicated modem couple.

## DESCRIPTION OF THE DRAWINGS

In order to provide a fuller description and contribute to the complete understanding of the characteristics of this invention, five sheets of drawings are attached to the specification which, while purely illustrative and not fully comprehensive, shows the following:

Figure number 1.- Is a block diagram of the modular public telephones adaptation unit subject hereof, with an overview of the functional units making the same up.

Figure number 2.- Is a diagram of the modular public telephones adaptation unit lines unit.

Figure number 3.- Is a diagram of the modular public telephones adaptation unit central processing unit.

Figure number 4.- Is a diagram of the modular public telephones adaptation unit communications unit.

Figure number 5.- Is, finally, a diagram of the feeder unit with which the modular public telephones adaptation unit subject hereof is fitted.

## PREFERRED EMBODIMENT OF THE INVENTION

In light of these figures, it can be seen that the modular public telephones adaptation unit, the block diagram of which generally appears in figure number 1, comprises a lines unit (1), a central processing unit (2), a communications unit (3), a feeder unit (4) and an X.25 interface connector (5).

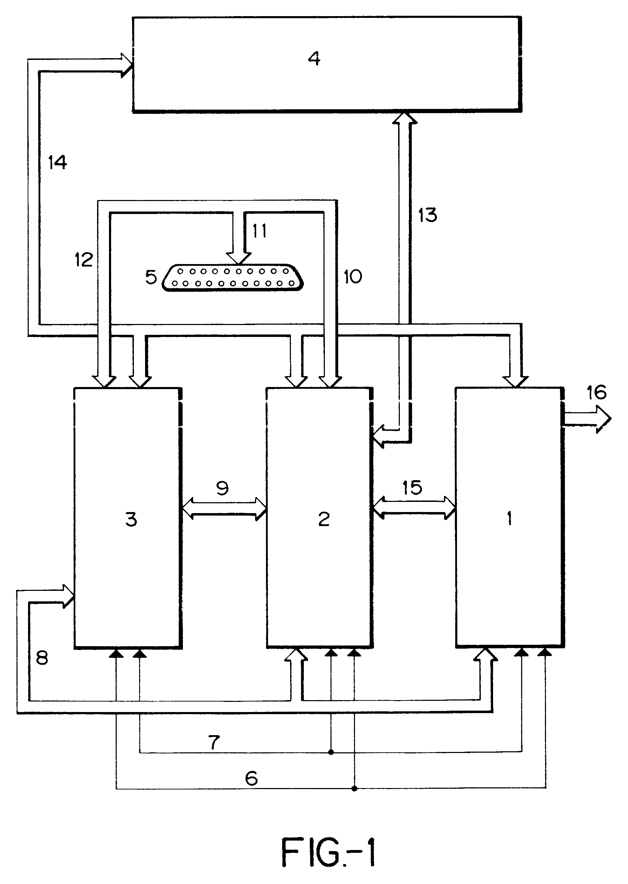

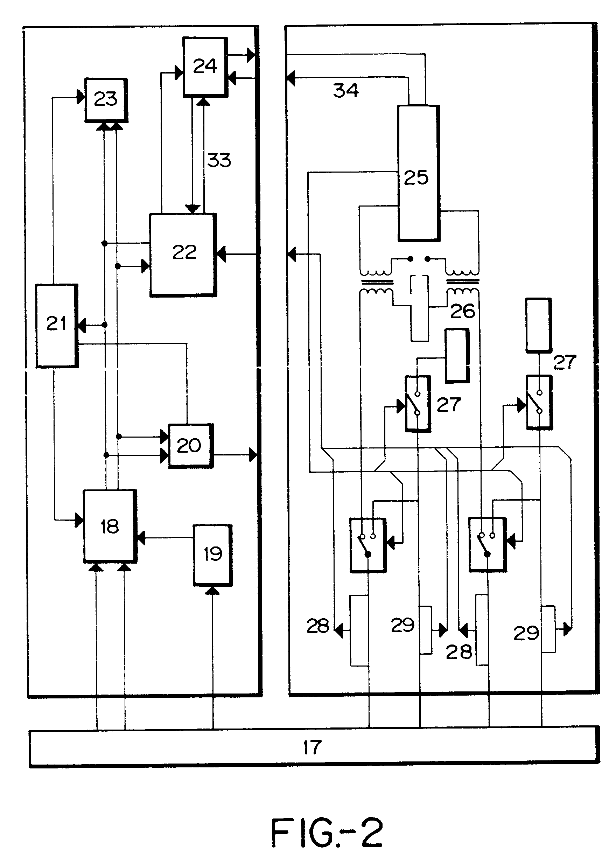

The switched telephone network and/or special services system connection is numbered (16), while on the other hand, the various signals connecting the units making up the context of the modular public telephones adaptation unit subject hereof, shown in figure 1, are numbered (6) so far as the direction signals, the data signals being numbered (7), and the general units control (8).

The modular public telephones adaptation unit also has a communications unit control (9), a V.22 bis modem control (12), the lines unit control (15), a feeder bus (14), and a feed checking signals bus (13).

Numbers (10) and (11) correspond to the X.25 bus.

Figure number 2 shows the diagram for the lines unit with which the modular public telephones adaptation unit is provided, this lines unit being designed to control connection to the modular telephones line and providing access to the packages switching network IBERPAC, for the validation and identification units that do not have the said access.

In turn, the lines unit informs the central processing unit of any failure in this connection.

Number (17) indicates the connector linking up with the interconnection unit.

A permanent lines control has also been provided by means of a structure based upon the microcontroller (22) and a programmes memory (EPROM) and a RAM memory (23).

Communication with the telephones and/or validation and identification unit takes place through a MODEM (24).

Since there are two lines to be attended to at each line unit, the modem (24) will be shared for communication with both, without this entailing any delays, for the communication time is very little.

Communication of each line unit with the central processing unit takes place by means of the FIFO cell (18) allowing waiting times in the exchange of data to be eliminated, since both the data received and the data transmitted will remain in two stores with which the FIFO cell (18) is provided, activating the cut signals on being loaded.

Each lines unit available in the equipment is addressed by means of a decoder (19) so that only one of the outlets activates the communication devices with the central processing unit.

In order that all lines units are uniform, only one decoder outlet is taken to each card through the interconnection unit.

The connections bus has a reset circuit acting on being fed or when so required by the central processing unit.

This same reset line is used for the central processing unit (2) to determine the lines units (1) with which the equipment is fitted.

The digital signals exchanged between the microcontroller (22) and the modem (24) are indicated as number (33).

The analogue signals (34) sent out and received by the modem go from a four wire configuration, i.e., independent signals through two different lines, to a two wire configuration, i.e., the two signals, receipt and transmission overlapping the same conductor, which function also takes place through operational circuits (25).

The coupling transformer (26) is used for line interface, thereby for there to be a change from balanced, i.e., non-ground signal, to unbalanced, or ground signal.

The transformer also rejects common mode or unbalanced signals that may have been induced in the telephone line.

The transformer acts as galvanic insulation between the modular public telephones adaptation unit and the telephone line, as well as changing the signal from balanced to unbalanced.

The units numbered (27) indicate the line connections and numbers (28) and (29) indicate off-hook and external connection lines call detection, respectively.

Furthermore, the addressing, control and data signals are numbered (30), (31) and (32) respectively.

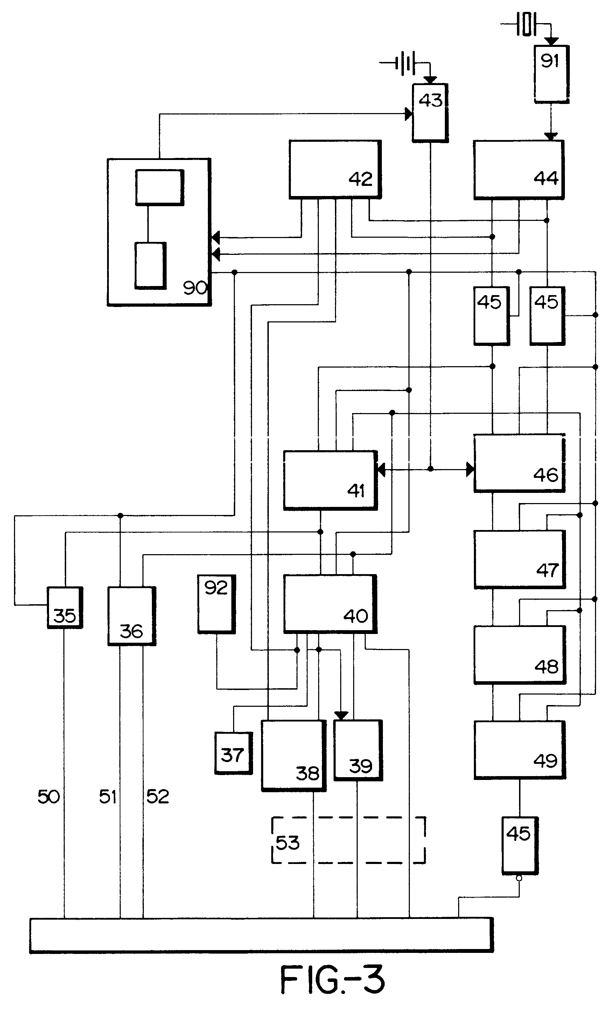

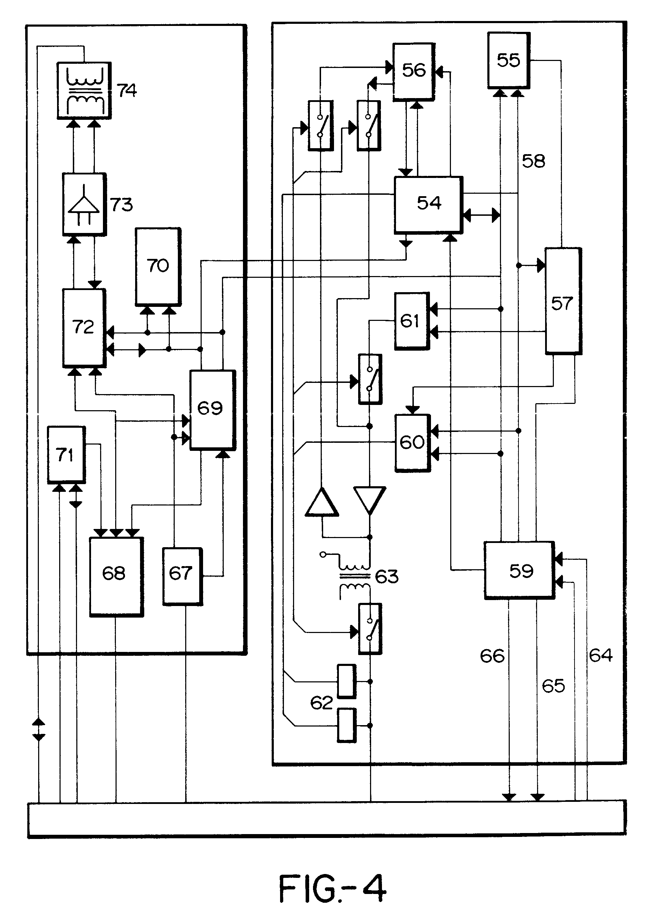

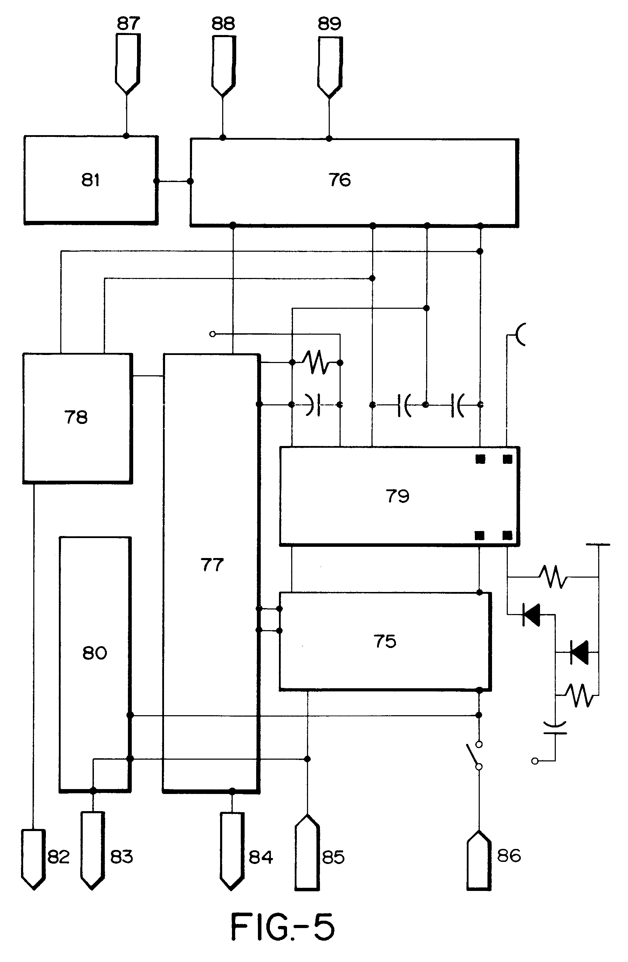

Structurally, the central processing unit, the diagram of which is shown in figure 3, comprises two microprocessors that can have access to all the unit's resources, the processor being numbered (44) and the X.25 controller (42).

Straight after these two microprocessors are the buffers (35), (36) and (45), which demultiplex and isolate the data (50), control (51) and address (52) buses.

Behind the said buffers (35), (36) and (45) are all the resources, addressed in memory. The following resources are available:

- EPROM, numbered (47).
- Static RAM, numbered (46).
- Timer, numbered (48).
- Devices controller, numbered (49).
- Real time clock, numbered (41).
- Programmable E/S port, numbered (40).
- EPROM series accessible from the port, numbered (37).
- Information, tests and reset bridges, numbered (92).

The independent software system has a watchdog clock (43) and a lithium battery as common elements thereof.

The module (43) acts as watchdog and as battery switching logic, whichever is required. A system clock (91) is also available.

The battery feeds the static RAM (46) and the real time clock (41).

The port (40) is used to detect and reset the units in the modular public telephones adaptation unit and in part of the X.25 physical protocol control. The rest is dealt with by the X.25 controller, numbered (42).

The final part of the block diagram comprises an RS232C driver (39) and an RS232C receiver (38), for communication with the rest of the units, and the block (53) required for X.25.

All memory decoding, time adaptation between peripherals, control signals adaptation between the microprocessors, DMA control, addresses control, buffer actuation and outfitting of interruption vectors, is carried out using a programmable gate-array.

Figure number 4 shows a diagram of the communications unit.

This unit controls the line connecting to the switched telephone network and/or special services system, the modem for communication with IBERPAC and communication in parallel with the central processing unit, by means of a structure based upon a microprocessor (54) and the use of a programme memory (EPROM) and a RAM memory (55).

The modem (56) is used in point by point applications. It is designed to modulate and demodulate X.25 series communication between the central processing unit and the access to IBERPAC at the centre.

The switched telephone network connection circuit, as part of the communications unit, physically links up the modular public telephones adaptation unit with the switched telephone network in order to establish communication with the modular public telephone operating system.

Similarly, this route is useful to communicate the modular public telephones adaptation unit with the validation and identification unit and with the validation and invoicing centre when it is not possible to link the validation and identification unit with the validation and invoicing centre through the IBERPAC network.

The core of the circuit is comprised by the aforesaid microcontroller (54) that is provided with the RAM and EPROM memory block (55), required for the execution of the programmes.

The decoder (57), controlled by the addresses bus (58), through the microcontroller, outfits the devices required for external control, namely:

- A device (59) for two-directional communication with the central processing unit.
- A store (60) outputting signals controlling the line connection elements.
- A device (61) generating multifrequency dialling tones.
- Modem circuit control devices.

The insertion of line analogue signals takes place by means of a separate transformer (62), to which receipt and transmission signals arrive from operational amplifiers.

Various analogue switches are provided that inject or otherwise receipt, transmission and multifrequency dialling signals towards the operationals.

The line status detection signals are directly connected to the microcontroller port so that they are immediately read thereby.

These line status detection signals refer to detection of call current, dialling tones, engaged tone, call tone and modem transporter detection, numbered (62).

Parallel two-directional communication with the central processing unit takes place by means of the FIFO cell (59), which allows simultaneous storage of the data to be transmitted and the data received from the central processing unit.

The unit also has a reset circuit that acts on being fed or when so required by the central processing unit.

This same line, controlled by the central processing unit, is used to determine whether the unit is actually installed at the modular public telephones adaptation unit.

As aforesaid, communication through the switched telephone network requires a series of devices with wholly specific functions.

These devices are the following:

- Incoming call detector (63). This detector's circuit is the same as that used in the lines unit, a high-sensitivity optoisolator being used in this case.
- Line connection (62) comprising a high voltage optoisolator, actuation of which connects with a transistor configured as a constant current generator.

The transistor keeps up a high impedance to alternating signals throughout the operating range and is not saturated, and therefore does not influence the same.

The current increases as loop resistance decreases to a maximum, staying at such level.

The continuous current containing the transformer windings does not influence the operation thereof.

The signal windings add up to a number of spirals equal to the compensating winding, which leads to no magnetic flux whatsoever being generated as a result of the continuous current.

- Dialling tone detector (62), which uses a specific circuit for this application.

The same includes the antiliaising and band pass filters to detect and process the signal detected.

The circuit has its own quartz oscillator to detect clock generation.

- Multifrequency dialer (61). The module that carries out this function has six data inputs plus a "hook" input to validate the data present at the inputs thereof.

The necessary filters are included internally for the output signal to fulfil the spectral characteristics required by the specifications of the modular public telephones adaptation unit, this allowing outlet directly to the transmission amplifier.

- Two to four wire conversion, numbered (62). The analogue signals emitted and received by the modem go from a configuration of four wires to a two-wire configuration. This takes place by means of two operational circuits.

A doorknob transformer is used for line interface, thereby for balanced telephone line to become unbalanced.

The transformer also rejects common mode signals, i.e., unbalanced, that might have been induced in the telephone line.

Besides these analogue signal processing functions, the communications unit (3) processes a series of digital signals, namely:

- Detection and display signals. These signals are all those that the microcontroller samples to determine the status of the devices outside the same, directly carrying the same to the microcontroller ports.
- Lines control signals, such being signals establishing control of the line status and used to programme the modem's operating mode.
- Central processing unit connection signals, communicating by means of the use of FIFO cell port B, port A thereof being connected to the communications unit (3) data bus.
- Presence and reset signals, designed to inform the central processing unit (2) as to whether the communications unit (3) is inserted in the modular public telephones adaptation unit and to generate the reset status to be able thus to de-outfit the same if anomalies are detected therein.
- External addresses, control and data signals, numbered (64), (65) and (66), respectively.
- To the right of the diagram, the area corresponding to the 2400bps modem, the RS232C receiver is numbered (67), the RS232C driver is numbered (68), the input/output stores are numbered (69) and the switchgear configuration unit is numbered (70).

Similarly, to the said right hand area of the diagram, corresponding to the description of the above paragraph, the control unit is numbered (71), and the modem is numbered (72), the hybrid circuits being numbered (73) and the isolation circuits being numbered (74).

Figure number 5 shows the feeder unit (4).

The following blocks should be noted in this unit:

- The inlet block (75), where the whole module is switched on and reset, battery voltage is distributed to the artificial lines, input to the converter is protected and a potential fuses failure is detected.

- The power block (76), including the electrolytic condensers in the power lines, as well as the outlet diodes and a small minimum charge.

- The block detecting the +5V status (77), provided with an input protection driver. When the voltage goes down from threshold, a correct voltage pilot is switched off and warns the alarm block, and yet, when the opposite is the case and voltage goes up beyond threshold, it activates the input block protection circuit.

- The +/- 12V voltage comparison block (78) where two voltage samples of the analogue lines are compared with a stable reference.

When one falls under the set thresholds, the local alarms are activated and the central processing unit (2) is warned.

- The DC/DC converter block (79) made with hybrid technology.

- The artificial lines block (80), where failure of the lines connection feeder fuse will activate one of the local alarms.

- The alarms block (81), where reports from the rest of the feeder unit (4) blocks arrive. The position of an alarm relay at rest gives way to the alarm indicator, opening the external loop. When everything is working properly, the relay is kept ON, and the indicator is switched off and the loop closed.

The +/- 12V comparison output voltage signals are also numbered (82), central feeding (83), correct 0 V feeding output (84), central feeding (85), -48V central feeding (86) alarm signals (87), +5V feeding (88) and + 12V and -12V analogue feeding (89).

The main characteristics of the said feeder unit (4) are the following:

A.- Battery feeding at the centre as polarity anti-inversion protection.

B.- Feeder output to artificial lines protected against over-voltages.

C.- DC/DC converter input protection.

D.- Protected +5V digital feeder output.

E.- +/- 12V analogue feeder output limited in short-circuit current.

F.- Independent treatment of analogue and digital returns to minimise coupling noise.

G.- Incorporates status lines for the central processing unit (2), with faults indicators.

H.- Switches for tests and adjustments, with internal test connector.

I.- General front on/off switch, and light pencils for general voltage status.

We feel that the device has now been sufficiently described for any expert in the art to have grasped the full scope of the invention and the advantages it offers.

The materials, shape, size and layout of the elements may be altered provided that this entails no modification of the essential features of the invention.

The terms used to describe the invention herein should be taken to have a broad rather than a restrictive meaning.

**Claims**

1.  Modular public telephones adaptation unit, comprising a lines module, a central processing unit module, a communications module and a module for interconnection with an X.25 external connector, characterised in allowing coded messages to be exchanged between the modular public telephone and the validation and invoicing centre, functional blocks of the modular public telephones management system, in respect of the validation and invoicing of credit card calls.

2.  Modular public telephones adaptation unit, as in claim one, characterised in the exchange of protocol, with both modular public telephones or validation and identification units, and with the validation and invoicing centre and the modular public telephones operating system, through the switched telephone network, special services system and/or packages switching network.

3.  Modular public telephones adaptation unit, as in previous claims, characterised in allowing operating parameters to be teleprogrammed from the modular public telephones operating system.

4.  Modular public telephones adaptation unit, as in previous claims, characterised in cyclic self-checking, in addition to generating and sending reports and alarms on the status of the modular public telephones operating system.

5.  Modular public telephones adaptation unit, as in previous claims, characterised in that the feeder module generates the digital and analogue feeding voltages required for the unit, from the centre's voltage, and the alarms protections and treatment, sending the same to the central processing unit.

6.  Modular public telephones adaptation unit, as in previous claims, characterised in that the communications module, has devices controlling the connection lines to the switched network, packages switching network and communication in parallel with the central processing unit module, by means of a structure comprising a micro-processor and the use of the EPROM and the RAM memories.

7.  Modular public telephones adaptation unit, as in previous claims, characterised in that the lines module controls communication with the modular public telephones and/or the validation and identification units, detection of cuts and opening of lines and by means of a devices decoder programmes the modem and permanently controls the status of the lines, all of this with a structure based upon a microprocessor.

8.  Modular public telephones adaptation unit, as in previous claims, characterised in that the central processing unit module comprises two microprocessors, one of which controls X.25 connection and a modular software design allowing access to all the unit's resources, using various buffers to demultiplex and isolate the addresses and data buses, with a memory addressing of all resources, moreover permitting asynchronous reading and writing between the microprocessors.

9.  Modular public telephones adaptation unit, as in previous claims, characterised in that the interconnection module connects all modules to each other, moreover allowing connection to the modular public telephones and/or validation and identification units, centre lines, general feeder input, special services system, X.25 connection and V.22 bis dedicated modem couple.

FIG.-1

FIG.-2

FIG.-3

FIG.-4

FIG.-5